(19) Europäisches Patentamt
European Patent Office
Office européen des brevets

(11) **EP 2 613 628 B1**

(12) **FASCICULE DE BREVET EUROPEEN**

(45) Date de publication et mention
de la délivrance du brevet:
**10.07.2019 Bulletin 2019/28**

(21) Numéro de dépôt: **11761658.1**

(22) Date de dépôt: **23.08.2011**

(51) Int Cl.:
***A01M 7/00*** *(2006.01)*

(86) Numéro de dépôt international:
**PCT/FR2011/051948**

(87) Numéro de publication internationale:
**WO 2012/032245 (15.03.2012 Gazette 2012/11)**

(54) **ENSEMBLE DE PULVÉRISATION POUR ENGIN AGRICOLE À PILOTAGE CARTOGRAPHIQUE**

SPRÜHVORRICHTUNG FÜR EINE LANDWIRTSCHAFTSMASCHINE MIT KARTOGRAFISCHER STEUERUNG

SPRAYING APPARATUS FOR AGRICULTURAL MACHINE WITH CARTOGRAPHIC PILOTING

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **10.09.2010 FR 1057209**

(43) Date de publication de la demande:
**17.07.2013 Bulletin 2013/29**

(73) Titulaire: **EXEL INDUSTRIES**
**51200 Epernay (FR)**

(72) Inventeur: **BALLU, Patrick Jean Marie**
**F-51100 Reims (FR)**

(74) Mandataire: **Ahner, Philippe et al**
**BREVALEX**
**95, rue d'Amsterdam**
**75378 Paris Cedex 8 (FR)**

(56) Documents cités:
EP-B1- 2 319 306      DE-A1- 19 725 547
DE-A1- 19 821 283     DE-C1- 19 642 439
GB-A- 2 337 984       GB-A- 2 347 368
US-A1- 2009 132 100   US-B1- 6 694 260

## Description

La présente demande de brevet se rapporte à un système de commande pour engin de pulvérisation agricole.

Un appareil agricole de pulvérisation agricole comporte classiquement une rampe de pulvérisation supportant une pluralité de buses de pulvérisation, alimentées en liquide phytosanitaire situé à l'intérieur d'une cuve par un circuit incorporant une pompe haute pression.

De tels appareils agricoles, divulguant les caractéristiques du préambule de la revendication 1, sont décrits dans les documents GB 2337984 A et EP 2319306 B1.

Pour répondre aux spécificités des végétaux à traiter, des ensembles multi-buses ont été mis au point pour remplacer les buses simples classiques.

Chaque ensemble multi-buses comprend un corps supportant plusieurs buses (typiquement 2, 3 ou 4 buses) et incorporant des moyens de vannes (électriques ou à air comprimé), permettant de faire fonctionner ces buses séparément ou en combinaison.

L'utilisation de tels ensembles multi-buses permet de projeter sur les végétaux à traiter des jets dont les formes, tailles de gouttes et débit sont parfaitement adaptés à chaque type de plante à traiter.

La présente invention a notamment pour but d'optimiser le fonctionnement d'un appareil agricole de pulvérisation dont la rampe est équipée d'ensembles multi-buses.

On atteint ce but de l'invention avec système de commande pour engin agricole de pulvérisation dont la rampe est équipée d'une pluralité d'ensembles multi-buses, remarquable en ce qu'il comprend des moyens pour piloter chaque ensemble multi-buses en fonction de données représentatives de la cartographie des végétaux à traiter.

Par « cartographie », on désigne la répartition des végétaux (en ce compris la détection de leur présence ou de leur absence, et la détection de leur état) non seulement dans le plan d'avancement de l'engin, mais également selon la verticale (c'est-à-dire présence ou non de dévers).

Grâce aux caractéristiques du système de commande selon l'invention, on peut adapter de manière extrêmement fine les types de jets et leurs débits aux différentes catégories de parcelles balayées simultanément par la rampe : parcelles avec ou sans végétaux, avec des végétaux de natures différentes, avec des végétaux plantés de manière plus ou moins dense, avec des végétaux présentant différents degrés de maturité, avec différents dévers, etc.

En d'autres termes, la présente invention permet de différencier complètement les ensembles multi-buses les uns par rapport aux autres, et ainsi de les faire fonctionner sur mesure, de manière unitaire ou par sous-groupes, pour produire une pulvérisation exactement adaptée à la nature et à la configuration topologique des végétaux.

Suivant d'autres caractéristiques optionnelles du système selon l'invention :

- ce système comprend des moyens de cartographie des végétaux à traiter, des unités de commande desdits ensembles multi-buses, et un boitier électronique programmable, apte à recevoir et à traiter des informations fournies par lesdits moyens de cartographie, et à envoyer en conséquence des signaux de commande à chaque ensemble multi-buses ;
- lesdits moyens de cartographie comprennent des moyens de positionnement géographique ;
- lesdits moyens de positionnement géographique comprennent des moyens du type GPS ;
- lesdits moyens de cartographie comprennent des moyens de détection de la présence ou de l'absence des végétaux à traiter, et/ou de leur morphologie: ceci permet d'adapter en temps réel le fonctionnement des ensembles multi-buses à la densité, à la taille ou encore à la couleur des végétaux à traiter ;
- lesdits moyens de détection sont choisis dans le groupe comprenant les caméras classiques et les caméras à infra-rouge ; à noter que tout autre type de capteur d'image peut convenir ;
- lesdits moyens cartographiques comprennent des moyens adaptés pour mesurer le dévers de la rampe dudit engin agricole : ces moyens de mesure de dévers permettent de corriger le différentiel de pression provoqué par ce dévers dans les canalisations du système de pulvérisation, en agissant sur les débits respectifs des ensembles multi-buses situés aux extrémités opposées de la rampe de l'engin agricole ;
- lesdits moyens de mesure de dévers sont choisis dans le groupe comprenant les inclinomètres, les moyens de détection de distance de la rampe au sol ou à sa végétation, et les moyens pour mesurer la différence de pression du liquide phytosanitaires dans des canalisations situées aux deux extrémités opposées de la rampe dudit engin agricole;- ledit boîtier électronique et lesdites unités de commande sont reliés entre eux par un système sélectionné dans le groupe comprenant les liaisons filaires du type Bus CAN, et les liaisons sans fil.

La présente invention se rapporte également à un engin agricole de pulvérisation équipé d'un système conforme à ce qui précède.

D'autres caractéristiques et avantages de la présente invention apparaîtront à la lumière de la description qui va suivre, et à l'examen des figures ci-annexées, dans lesquelles :

- la figure 1 représente un engin agricole de pulvérisation équipé d'un système selon l'invention,
- la figure 2 représente de manière schématique le système de commande selon l'invention équipant l'engin agricole de la figure 1,

- la figure 3 représente un ensemble multi-buses adapté pour fonctionner avec un système de commande selon l'invention,
- la figure 4 représente, en vue de dessus, l'engin agricole de la figure 1 parcourant un champ planté de végétaux de différentes natures et/ou présentant différents états (en ce compris la présence ou l'absence de végétaux),
- la figure 5 représente, en vue de derrière, l'engin agricole de la figure 1 lorsqu'il circule sur un terrain en dévers, et
- la figure 6 est une vue analogue à celle de la figure 5, sur laquelle on a représenté d'autres moyens de détection de dévers.

Sur l'ensemble de ces figures, des références identiques ou analogues désignent des organes ou ensembles d'organes identiques ou analogues.

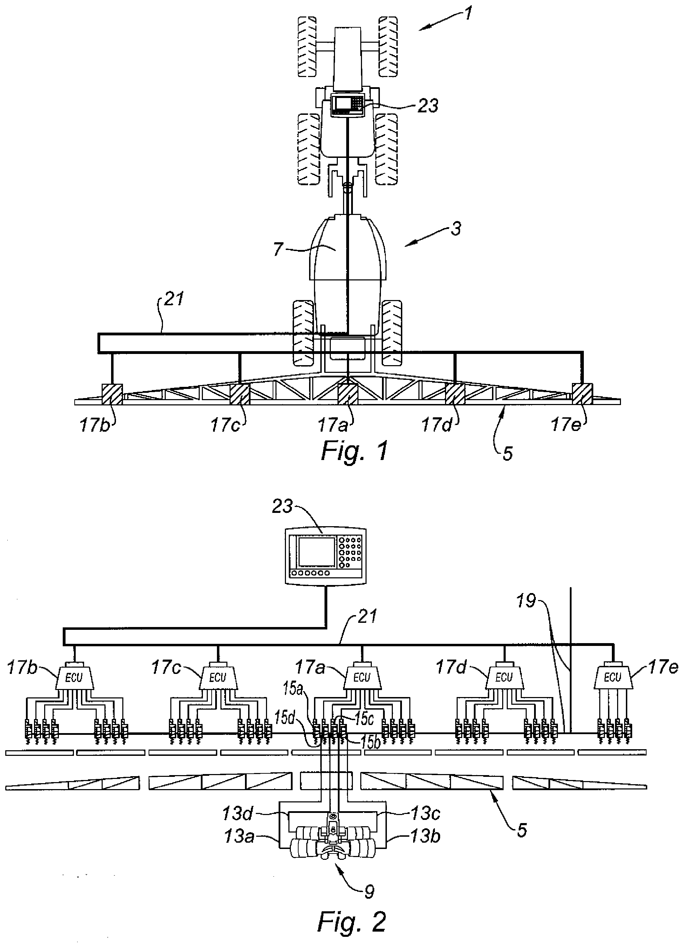

On se reporte à présent à la figure 1, sur laquelle on a représenté un tracteur 1 remorquant un pulvérisateur 3 supportant une rampe de pulvérisation 5, pouvant typiquement faire plusieurs dizaines de mètres de longueur.

Comme cela est connu en soi, un tel pulvérisateur 3 comporte une cuve de liquide phytosanitaire 7, qui alimente une pluralité de buses réparties sur toute la longueur de la rampe 5, au moyen d'au moins une pompe haute pression (non représentée).

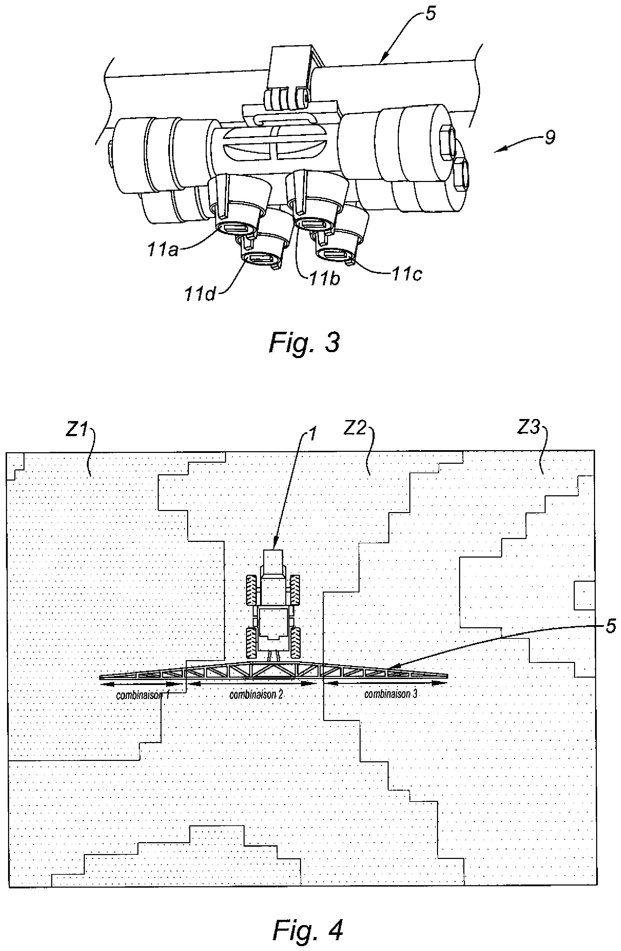

Plus précisément, dans le cadre de la présente invention, et comme cela est visible à la figure 3, les buses sont en fait réparties par paquets au sein d'ensembles multi-buses 9.

Plus précisément, comme cela est visible sur cette figure 3, on a représenté de manière non limitative un ensemble multi-buses à quatre buses 11a, 11b, 11c, 11d.

Cet ensemble multi-buses 9 est adapté pour pulvériser du liquide phytosanitaire à travers chacune des buses qui le composent, ou bien à travers une combinaison choisie de ces buses.

Pour cela, comme cela est visible sur la figure 2, les conduites 13a, 13b, 13c, 13d, susceptibles de véhiculer du liquide phytosanitaire, aboutissent respectivement aux buses 11a, 11b, 11c, 11d.

Des électrovannes respectives 15a, 15b, 15c, 15d, pilotées par une unité de commandes associée 17a, permettent de faire arriver sélectivement le liquide phytosanitaire dans l'une des buses 13a à 13d, ou bien dans une combinaison de ces buses.

De préférence, comme cela est représenté à la figure 2, une ligne d'air comprimé 19 permet d'agir sur les vannes associées à chaque buse, pour les ouvrir ou les fermer.

Comme cela est visible sur la figure 2, il y a en fait une pluralité d'unités de commandes 17a, 17b, 17c, 17d, 17e, associées chacune à un ou plusieurs ensembles multi-buses, de manière à assurer la commande de chacun de ces ensembles.

L'ensemble de ces unités de commande 17 sont reliées entre elles par une ligne de transmission d'informations 21, qui est de préférence de type BUS ou Bus CAN, de manière à limiter le nombre de câbles électriques.

La ligne 21 communique avec un boîtier de commande 23, sur lequel l'opérateur de l'engin agricole peut saisir des instructions de fonctionnement.

Il faut noter que les buses 11a, 11b, 11c, 11d de chaque ensemble multi-buses 9 présentent des caractéristiques de pulvérisation différentes.

A titre d'exemple, les différences peuvent porter sur le débit de chacune de ces buses, ou bien sur la forme du jet, ou bien encore sur la taille des gouttelettes du produit phytosanitaire pulvérisé.

On se reporte à présent à la figure 4, sur laquelle on peut voir l'engin agricole de la figure 1, circulant sur une zone de culture comportant plusieurs sous zones Z1, Z2, Z3 plantées de manière différente.

La différence de plantations peut par exemple concerner la présence ou l'absence de végétaux, des différences de densité de végétaux, voire même des différences de nature de végétaux.

Le système selon l'invention permet justement de prendre en compte ces différences lors du passage de l'engin agricole 1.

Plus précisément, on pilote les buses 11a à 11d de chaque ensemble multi-buses 9, de manière à choisir la buse ou bien la combinaison de buses de cet ensemble qui est susceptible d'engendrer le ou les jets de pulvérisation correspondant exactement à la morphologie et à la nature des végétaux à traiter.

Par exemple, dans le cas correspondant à la figure 4, on peut réaliser une « combinaison 1 » des buses 11 des ensembles 9 situés sur la partie gauche de la rampe 5, qui permette de traiter des végétaux plantés de manière dense.

Sur la partie médiane de la rampe de pulvérisation 5, on réalise une « combinaison 2 » de buses 11 des ensembles 9 qui permette de traiter des végétaux présentant une taille particulièrement grande, et sur la partie droite de la rampe de pulvérisation 5, on réalise une « combinaison 3 » de buses 11 des ensembles de buses 9 qui permette de traiter des végétaux chétifs, nécessitant un dosage plus important de produit phytosanitaire.

Bien entendu, on comprend qu'un réglage manuel du fonctionnement des buses 11 des ensembles de buses 9 serait particulièrement fastidieux, et en pratique sans doute irréalisable.

Pour cela, la présente invention prévoit d'interfacer le boîtier de commande 23 à un système de positionnement géographique, permettant de localiser à chaque instant l'engin agricole 1 par rapport au champ à traiter, ce système de positionnement géographique communiquant lui-même avec une base de données fournissant des informations sur la cartographie des végétaux à traiter.

De la sorte, le système selon l'invention permet de commander de manière entièrement automatique les ensembles de buses 9, en fonction de la position de l'engin agricole 1 sur le champ à traiter.

De manière alternative, on peut envisager que l'engin agricole 1 soit muni de moyens de détection à la volée des caractéristiques des végétaux à traiter (couleur, densité, taille ...), permettant ainsi d'ajuster en direct le choix des buses 11 de chaque ensemble de buses 9.

Ces moyens de détection peuvent comprendre des moyens d'acquisition d'images, tels que des caméras classiques ou infra-rouges.

Concernant le cas particulier des terrains en dévers, il faut rappeler ici qu'une rampe de pulvérisation peut présenter une longueur allant jusqu'à 48 mètres, ce qui engendre des différences de pression du liquide phytosanitaire envoyé par la pompe principale qui sont très importantes, et d'autant plus importantes que le liquide phytosanitaire est chargé en produits phytosanitaires, ou présente une masse volumique élevée : cette différence de pression s'exprime en effet par la formule :

$$\Delta P = \rho \times G \times \Delta Z,$$

P étant la pression, $\rho$ la masse volumique du liquide, G l'accélération de la terre et Z l'altitude.

Par l'application de cette formule, dans un dévers de 10 %, qui n'est pas rare, une rampe de 40 mètres de large présente une différence de hauteur de 4 mètres entre ses deux extrémités, laquelle différence de hauteur engendre une différence de pression de 0,4 bars en eau, et de 0,52 bars en engrais liquide.

Si le dévers atteint 15% avec une rampe de 48 mètres de long pulvérisant de l'engrais liquide, la différence de pression s'élève à 1,25 bars.

Cette différence de pression très importante a pour conséquence des différences de débit dans les buses situées aux extrémités opposées de la rampe, entraînant des différences de dosage importantes de produit phytosanitaire sur les végétaux à traiter.

Pour compenser ces différences de dosage, dans le cadre de la présente invention, on tient compte du dévers du terrain sur lequel circule l'engin agricole 1, pour choisir les buses ou combinaison de buses 11 des ensembles de buses 9 permettant de réaliser les corrections de débit appropriées.

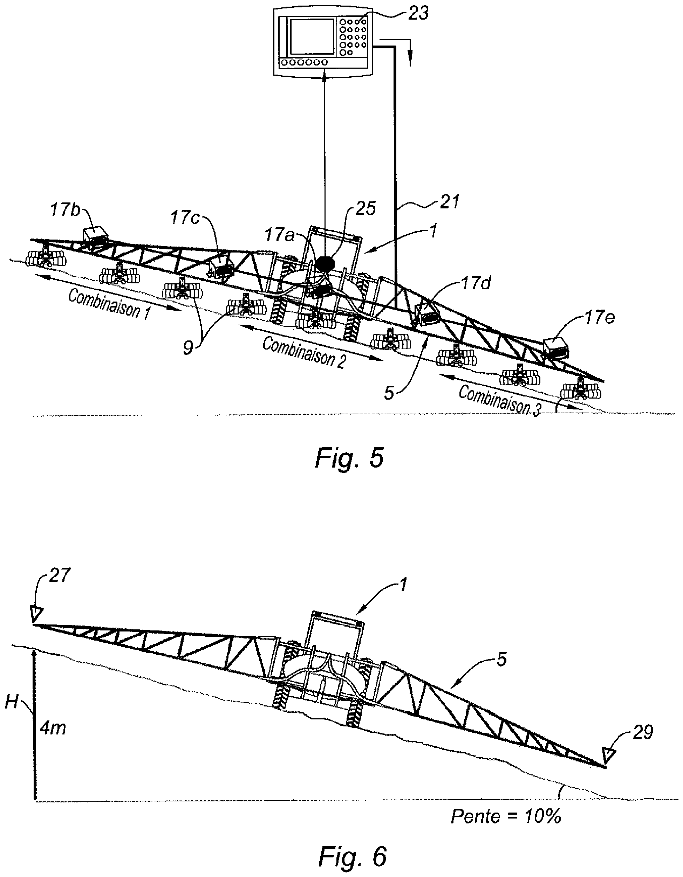

La mesure du dévers peut être effectuée au moyen d'un inclinomètre 25 situé par exemple dans la zone médiane de la rampe 5, comme cela est représenté à la figure 5, les informations mesurées par cet inclinomètre étant envoyées au boîtier de commande 23.

Le boîtier de commande 23 envoie alors aux unités de commande 17a à 17e les informations permettant de réaliser les choix de buses ou de combinaison de buses 11 appropriés: par exemple trois combinaisons différentes désignées respectivement « combinaison 1 », « combinaison 2 » et « combinaison 3 », sur la figure 5.

Il faut ici bien entendu préciser que les ensembles multi-buses 9 peuvent être pilotés de manière indépendante et unitaire, ou bien de manière groupée, de façon à obtenir par exemple plusieurs tronçons de rampe présentant chacun plusieurs ensembles de buses 9 engendrant exactement la même combinaison de jets de pulvérisation.

Une autre possibilité pour prendre en compte le dévers du terrain sur lequel circule l'engin agricole 1, consiste à mesurer la pression aux deux extrémités 27 et 29 de la rampe de pulvérisation 5, comme cela est représenté à la figure 6, et à déduire de la différence de ces pressions, provoquée par la différence de hauteur H entre les deux extrémités de la rampe, les corrections à apporter sur chacun des ensembles multi-buses 9.

Une autre solution pour prendre en compte le dévers serait d'utiliser une base de cartographie tridimensionnelle, dans laquelle seraient renseignées non seulement la répartition en plan des végétaux à traiter, mais également la pente des terrains sur lesquels ils se trouvent, cette base de données étant interfacée avec le boîtier de commande 23, comme cela a été décrit plus haut.

Comme on peut le comprendre à la lumière de ce qui précède, le système de commande des ensembles multi-buses 9 selon l'invention est extrêmement performant, en ceci qu'il permet d'adapter en temps réel, et sans aucune intervention de l'opérateur, la nature des jets ou combinaisons de jets de chacun de ces ensembles 9 aux caractéristiques des végétaux balayés par la rampe de pulvérisation 5.

Comme indiqué précédemment, cette combinaison particulière de jets propres à chaque ensemble 9 peut être effectuée de manière unitaire et indépendante pour chacun de ces ensembles multi-buses, mais il est bien entendu également possible de faire fonctionner les ensembles multi-buses 9 par groupes, tous les ensembles 9 d'un même groupe présentant alors les mêmes caractéristiques de pulvérisation.

On notera que la présente invention permet notamment de régler de manière très simple le problème du traitement en produit phytosanitaire des champs bordés par des cours d'eau.

La réglementation impose en effet des buses particulières pour la pulvérisation de produit phytosanitaire au voisinage des courants d'eau.

Dans le cadre de la présente invention, on peut prévoir que le ensembles multi-buses situés au voisinage des extrémités de la rampe de pulvérisation 5 comportent de telles buses particulières répondant aux normes en vigueur, et que ces buses entrent en fonction automatiquement, sous la commande du boîtier 23, lorsque l'engin agricole circule au voisinage des cours d'eau.

**Revendications**

1. Ensemble de pulvérisation pour engin agricole, comprenant une rampe (5) équipée d'une pluralité d'ensembles multi-buses (9), et comprenant des moyens (15a à 15, 17a à 17e, 23, 25) pour piloter chaque ensemble multi-buses (9) en fonction de données représentatives de la cartographie (Z1, Z2, Z3) des végétaux à traiter, **caractérisé en ce que** les buses (11a, 11b, 11c, 11d) au sein de chaque ensemble multi-buses (9) présentent des caractéristiques de pulvérisation différentes.

2. Ensemble de pulvérisation selon la revendication 1, **caractérisé en ce qu'**il comprend des moyens de cartographie des végétaux à traiter, des unités (17a à 17e) de commande desdits ensembles multi-buses (9), et un boitier électronique programmable (23), apte à recevoir et à traiter des informations fournies par lesdits moyens de cartographie, et à envoyer en conséquence des signaux de commande à chaque ensemble multi-buses (9).

3. Ensemble de pulvérisation selon la revendication 2, **caractérisé en ce que** lesdits moyens de cartographie comprennent des moyens de positionnement géographique.

4. Ensemble de pulvérisation selon la revendication 3, caractérisé en ce lesdits moyens de positionnement géographique comprennent des moyens du type GPS.

5. Ensemble de pulvérisation selon la revendication 2, caractérisé en ce lesdits moyens de cartographie comprennent des moyens de détection de la présence ou de l'absence des végétaux à traiter, et/ou de leur morphologie.

6. Ensemble de pulvérisation selon la revendication 5, **caractérisé en ce que** lesdits moyens de détection sont choisis dans le groupe comprenant les caméras classiques et les caméras à infra-rouge.

7. Ensemble de pulvérisation selon l'une quelconque des revendications 2 à 6, **caractérisé en ce que** lesdits moyens cartographiques comprennent des moyens adaptés pour mesurer le dévers de ladite rampe.

8. Ensemble de pulvérisation selon la revendication 7, caractérisé en ce lesdits moyens de mesure de dévers sont choisis dans le groupe comprenant les inclinomètres (25), les moyens de détection de distance de la rampe au sol ou à sa végétation, et les moyens pour mesurer la différence de pression du liquide phytosanitaires dans des canalisations situées aux deux extrémités opposées (27, 29) de ladite rampe (5).

9. Ensemble de pulvérisation selon l'une quelconque des revendications 2 à 8, caractérisé en ce ledit boîtier électronique (23) et lesdites unités de commande (17a à 17e) sont reliés entre eux par un système sélectionné dans le groupe comprenant les liaisons filaires du type BUS ou Bus CAN (21), et les liaisons sans fil.

10. Engin agricole de pulvérisation (1) équipé d'un ensemble conforme à l'une quelconque des revendications qui précèdent.

**Patentansprüche**

1. Sprühanordnung für eine landwirtschaftliche Maschine, umfassend eine Rampe (5), die mit einer Mehrzahl von Vielfachdüsenanordnungen (9) ausgestattet ist, und umfassend Mittel (15a bis 15, 17a bis 17e, 23, 25) zum Steuern jeder Vielfachdüsenanordnung (9) als Funktion von Daten, die repräsentativ sind für die Kartografie (Z1, Z2, Z3) der zu behandelnden Pflanzen, **dadurch gekennzeichnet, dass** die Düsen (11a, 11b, 11c, 11d) innerhalb jeder Vielfachdüsenanordnung (9) unterschiedliche Sprüheigenschaften aufweisen.

2. Sprühanordnung nach Anspruch 1, **dadurch gekennzeichnet, dass** sie Mittel für die Kartografie der zu behandelnden Pflanzen aufweist, ferner Einheiten (17a- 17e) zur Steuerung der Vielfachdüsenanordnungen (9), sowie einen programmierbaren elektronischen Kasten (23), der dazu ausgelegt ist, Informationen zu empfangen und zu verarbeiten, die durch die Kartografiemittel geliefert werden, und als Folge hiervon Steuerungssignale an jede Vielfachdüsenanordnung (9) zu schicken.

3. Sprühanordnung nach Anspruch 2, **dadurch gekennzeichnet, dass** die Kartografiemittel Mittel zur geographischen Positionierung umfassen.

4. Sprühanordnung nach Anspruch 3, **dadurch gekennzeichnet, dass** die Mittel zur geographischen Positionierung Mittel vom Typ GPS umfassen.

5. Sprühanordnung nach Anspruch 2, **dadurch gekennzeichnet, dass** die Kartografiemittel Mittel zur Detektion des Vorhandenseins oder des Fehlens der zu behandelnden Pflanzen und/oder ihrer Morphologie umfassen.

6. Sprühanordnung nach Anspruch 5, **dadurch gekennzeichnet, dass** die Detektionsmittel ausgewählt sind aus der Gruppe umfassend die klassischen Kameras und die Infrarotkameras.

**7.** Sprühanordnung nach einem der Ansprüche 2 bis 6, **dadurch gekennzeichnet, dass** die Kartografiemittel Mittel umfassen, die dazu ausgelegt sind, die Neigung der Rampe zu messen.

**8.** Sprühanordnung nach Anspruch 7, **dadurch gekennzeichnet, dass** die Mittel zur Messung der Neigung ausgewählt sind aus der Gruppe umfassend die Neigungsmesser (25), die Mittel zur Detektion des Abstands der Rampe vom Boden oder von seiner Vegetation, sowie die Mittel zum Messen der Druckdifferenz der Pflanzenschutzflüssigkeit in den Leitungen, die sich an den zwei entgegengesetzten Enden (27, 29) der Rampe (5) befinden.

**9.** Sprühanordnung nach einem der Ansprüche 2 bis 8, **dadurch gekennzeichnet, dass** der elektronische Kasten (23) und die Steuerungseinheiten (17a-17e) miteinander durch ein System verbunden sind, das ausgewählt ist aus der Gruppe umfassend die drahtgebundenen Verbindungen vom Typ BUS oder CAN-BUS (21), sowie die drahtlosen Verbindungen.

**10.** Landwirtschaftliche Sprühmaschine (1), die mit einer Anordnung gemäß einem der vorhergehenden Ansprüche ausgestattet ist.

**Claims**

**1.** Spraying apparatus for an agricultural machine comprising a boom (5) equipped with a plurality of multi-nozzle assemblies (9), and comprising means (15a to 15, 17a to 17e, 23, 25) for piloting each multi-nozzle assembly (9) according to data representative of the cartography (Z1, Z2, Z3) of the plants to be treated, **characterised in that** the nozzles (11a, 11b, 11c, 11d) within each multi-nozzle unit (9) have different spraying characteristics.

**2.** Spraying apparatus according to claim 1, **characterised in that** it comprises cartographic means for the plants to be treated, units (17a to 17e) for controlling said multi-nozzle assemblies (9), and a programmable electronics unit (23), capable of receiving and processing information provided by said cartographic means, and of sending control signals to each multi-nozzle assembly (9) accordingly.

**3.** Spraying apparatus according to claim 2, **characterised in that** said cartographic means comprise geographical positioning means.

**4.** Spraying apparatus according to claim 3, **characterised in that** said geographical positioning means comprise GPS-type means.

**5.** Spraying apparatus according to claim 2, **charac-**terised in that** said cartographic means comprise means for detecting the presence or absence of plants to be treated and/or the morphology thereof.

**6.** Spraying apparatus according to claim 5, **characterised in that** said detection means are chosen from the group comprising conventional cameras and infrared cameras.

**7.** Spraying apparatus according to any of claims 2 to 6, **characterised in that** said cartographic means comprise means suitable for measuring the tilt of said boom.

**8.** Spraying apparatus according to claim 7, **characterised in that** said tilt measuring means are chosen from the group comprising inclinometers (25), means for detecting the distance of the boom from the ground or its vegetation, and means for measuring the pressure difference of the phytosanitary liquid in pipes situated at the two opposite ends (27, 29) of said boom (5).

**9.** Spraying apparatus according to any of claims 2 to 8, **characterised in that** said electronics unit (23) and said control units (17a to 17e) are connected to one another by a system chosen from the group comprising wired connections of the BUS or CAN BUS type (21), and wireless connections.

**10.** Agricultural spraying machine (1) equipped with an apparatus according to any of the previous claims.

**Fig. 1**

**Fig. 2**

**Fig. 3**

**Fig. 4**

Fig. 5

Pente = 10%

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2337984 A
- EP 2319306 B1